# EUROPÄISCHE PATENTSCHRIFT

(11) **EP 2 767 452 B1**
(45) Veröffentlichungstag und Bekanntmachung des Hinweises auf die Patenterteilung: **04.07.2018**
(21) Anmeldenummer: 14155200.0
(22) Anmeldetag: 14.02.2014
(51) Int. Cl.: B62B 3/02, B62B 5/00

(54) **Einrichtung zur Anordnung eines Schwerpunktes eines Gerätewagens**
Device for adjusting the centre of gravity of a hand cart
Dispositif destiné à l'agencement d'un centre de gravité d'une servante d'outillage

(30) Priorität: 15.02.2013 DE 102013101525
(43) Veröffentlichungstag der Anmeldung: 20.08.2014
(73) Patentinhaber: Karl Storz SE & Co. KG, 78532 Tuttlingen (DE)
(72) Erfinder: Emmerich, Bernd, 78532 Tuttlingen (DE); Jansche, Andreas, 78532 Tuttlingen (DE)

(56) Entgegenhaltungen:
- DE-U1- 29 801 799
- US-A- 115 779
- US-A- 1 887 067
- US-A1- 2010 176 568

## Beschreibung

Die Erfindung betrifft einen Gerätewagen mit einem Traggestell, das mindestens einen Ablagebereich zur Aufnahme von Gerätschaften sowie eine Grundplatte aufweist, wobei an der Grundplatte mit Rollenfüßen versehene Tragarme gelagert sind.

Derartige Gerätewagen sind insbesondere im medizinischen Bereich in verschiedenen Ausführungsformen bekannt. Die Gerätewagen weisen in der Regel ein Traggestell mit verschiedenen Ablagebereichen und/oder Schubfächern auf, die zur Aufnahme verschiedenster Gerätschaften, wie beispielsweise Pumpen, Instrumenten und Lichtquellen dienen. Zusätzlich sind die Gerätewagen häufig mit verschwenkbaren Haltearmen für Monitore ausgerüstet, über die beispielsweise der Operateur bei der endoskopischen Chirurgie die Operation verfolgen kann.

Die Gerätewagen müssen für einen mobilen Einsatz verfahrbar ausgebildet sein und ein hohes Maß an Standsicherheit und Kippsicherheit aufweisen. Zur Erhöhung der Kippsicherheit ist es bekannt, den Schwerpunkt der Gerätewagen durch eine entsprechende Anordnung der zu transportierenden Gerätschaften möglichst weit unten anzuordnen.

Aus der DE 298 01 799 U1 ist ein gattungsgemäßer Gerätewagen bekannt. Zur Erhöhung der Standsicherheit sind die Tragarme der Rollenfüße bei diesem bekannten Gerätewagen ausziehbar ausgebildet. Durch die Ausziehbarkeit der Tragarme lässt sich zwar die Standfläche des Gerätewagens vergrößern, jedoch nur in die vorgegebenen Richtungen der fest mit der Grundplatte verbundenen Tragarme.

US20100176568 offenbart Verfahrvorrichtung für einen Flügel, der die Bewegung von Flügel von einer Stelle zum anderen ermöglicht. Diese Verfahr Vorrichtung für einen Flügel umfasst zentrale Nabe. Zwei vordere Arme sind mit dem vorderen Teil dieser Nabe verbunden. Ein hinterer Arm mit Längsschlitz ist mit dem hinteren Teil der Nabe schwenkbar verbunden. Die Position des hinteren Arms kann über die Länge des Schlitzes eingestellt werden, um Flügel mit verschiedener Länge aufzunehmen.

Einer Schwerpunktverlagerung eines beispielsweise mit einem verschwenkbaren Haltearm für einen Monitor versehenen Gerätewagens kann mit den ausziehbaren Tragarmen nur unzureichend entgegengewirkt werden.

Davon ausgehend liegt der Erfindung die **Aufgabe** zugrunde, einen Gerätewagen der eingangs genannten Art so auszugestalten, dass dieser ein Höchstmaß an Standsicherheit und Kippstabilität gewährleistet.

Die **Lösun**g dieser Aufgabenstellung erfolgt erfindungsgemäß durch einen Gerätewagen gemäß Anspruch 1. Bevorzugte Ausführungsbeispiele sind in den Unteransprüchen definiert. Durch die Möglichkeit, einen mit einem Rollenfuß ausgestatteten Tragarm nicht nur in der horizontalen Ebene der Grundplatte relativ zu dieser auszuziehen, also das Ende des Tragarms, das den Rollenfuß trägt, weiter von der Grundplatte wegzuziehen, sondern den Tragarm auch horizontal in der Ebene der Grundplatte verlagern zu können, besteht die Möglichkeit, die Standfläche des Gerätewagens gezielt so zu vergrößern oder anzupassen, dass die Vergrößerung und Anpassung der Standfläche genau dort vorgenommen werden kann, wo, beispielsweise durch Ausschwenken eines Haltearms, der Schwerpunkt des Gerätewagens ungünstig verlagert wurde. Verlagerbar bedeutet, dass der Tragarm auch in einer anderen Richtung als der Richtung, in der er ausziehbar ist, relativ zur Grundplatte bewegt werden kann. Insbesondere kann er von der Grundplatte teilweise oder vollständig gelöst, und in der horizontalen Ebene an anderer Stelle der Grundplatte oder in einem anderen Winkel zur Grundplatte wieder an dieser befestigt werden.

Gemäß einer bevorzugten Ausführungsform der Erfindung wird vorgeschlagen, dass alle Tragarme in der horizontalen Ebene der Grundplatte ausziehbar und verlagerbar an der Grundplatte festlegbar sind und darüber hinaus die Tragarme unabhängig voneinander und individuell ausziehbar und verlagerbar sind, um zur Verbesserung der Standsicherheit und Kippsicherheit die Tragarme gezielt einstellen zu können, wobei beispielsweise auch die beengten Platzverhältnisse in einem Operationssaal berücksichtigt werden können.

Die Ausziehbarkeit der Tragarme kann beispielsweise auch durch die teleskopierbare Ausgestaltung der Tragarme bewerkstelligt werden.

Mit einer praktischen Ausführungsform der Erfindung wird vorgeschlagen, dass der mindestens eine Tragarm stufenlos ausziehbar und verlagerbar an der Grundplatte festlegbar ist, um eine besonders feinfühlige Anpassung der Tragarme an die veränderte Schwerpunktlage des Gerätewagens zu ermöglichen.

Gemäß einer alternativen Ausführungsform der Erfindung wird vorgeschlagen, dass der mindestens eine Tragarm in vorgegebenen Rastschritten ausziehbar und verlagerbar an der Grundplatte festlegbar ist.

Weiterhin wird mit der Erfindung vorgeschlagen, dass am grundplattenseitigen freien Ende des mindestens einen Tragarms ein Bolzen so festlegbar ist, dass der mindestens eine Tragarm um den Bolzen verschwenkbar an der Grundplatte gelagert ist. Diese Art der Ausgestaltung erlaubt auf besonders einfache Art und Weise eine seitliche Verlagerung des jeweiligen Tragarms durch bloßes Verschwenken um den Schwenkbolzen.

Das Festlegen des mindestens einen Tragarms an der Grundplatte in seiner jeweiligen Position erfolgt bei einem erfindungsgemäß ausgebildeten Gerätewagen vorteilhafterweise über Bolzen, die in korrespondierende Bohrungen in der Grundplatte und im Tragarm einsetzbar sind.

Durch das Vorsehen mehrerer Bohrungen in der Grundplatte und im Tragarm an unterschiedlichen Stellen kann der Tragarm in verschiedenen Positionen und verschieden weit ausgezogen an der Grundplatte festgelegt werden.

Durch das Vorsehen von Langlöchern am Tragarm oder der Grundplatte kann der Tragarm vorteilhafterweise auch stufenlos verstellbar mit Hilfe der Bolzen mit der Grundplatte verbunden werden. Um den Bolzen im Langloch zu sichern, kann dieser beispielsweise mit einem Gewinde versehen sein, auf das zur Befestigung des Tragarms an der Grundplatte eine Schraubenmutter aufschraubbar ist. Alternativ können eine oder mehrere Bohrungen am Tragarm und / oder der Grundplatte mit einem Innengewinde versehen sein, in das ein mit einem passenden Außengewinde versehener Bolzen einschraubbar ist. Auf diese Weise kann der Tragarm leicht und schnell von der Grundplatte gelöst und an anderer Stelle wieder befestigt werden. Es wird vorgeschlagen, dass die Grundplatte aus zwei voneinander beabstandeten und parallel zueinander angeordneten Platten besteht, wobei die Tragarme zwischen den beiden Platten der Grundplatte gelagert sind.

Dabei können die Platten verschiedenste Abstände zueinander aufweisen. Vorteilhafterweise kann der Abstand im Wesentlichen der Dicke eines Tragarms entsprechen. Dies hat den Vorteil, dass der Tragarm sicher zwischen den Platten der Grundplatte gehalten wird. Durch das zusätzliche Vorsehen seitlicher Führungen, zwischen die der Tragarm zwischen den Platten eingeschoben wird, kann auch eine sichere Ausrichtung des Tragarms gewährleistet werden. Es können an verschiedenen Positionen seitlich an oder zwischen den Platten solche Führungen vorgesehen sein, um den oder die Tragarme nach Bedarf an verschiedenen Stellen an der Grundplatte festlegen zu können.

Zur Erhöhung der Kippstabilität ist es vorteilhaft, den Schwerpunkt des Gerätewagens möglichst tief anzuordnen. Hierzu wird erfindungsgemäß vorgeschlagen, dass der Zwischenraum zwischen den beiden Platten der Grundplatte als zusätzlicher Aufnahmeraum für Gerätschaften, insbesondere für schwere Systemkomponenten, wie Transformatoren, nutzbar ist.

Schließlich wird mit der Erfindung vorgeschlagen, dass die Rollenfüße an den von der Grundplatte entfernten freien vorderen Enden der Tragarme angeordnet sind und dass die Tragarme ausgehend von der Lagerstelle der Rollenfüße in Richtung auf die Grundplatte zu stufenförmig nach unten abgewinkelt ausgebildet sind.

Vorteilhafterweise ist die erfindungsgemäße Abwinklung der Tragarme nach unten so ausgebildet, dass die Tragarme in etwa auf Höhe der horizontalen Drehachse der Rollenfüße an der Grundplatte gelagert sind, wodurch der Schwerpunkt des Gerätewagens weiter nach unten verlagert wird und auch die Rollenfüße eine höhere Kippsicherheit erhalten.

Weitere Merkmale und Vorteile der Erfindung ergeben sich anhand der zugehörigen Zeichnungen, in denen mehrere Ausführungsbeispiele eines erfindungsgemäßen Gerätewagens nur beispielhaft dargestellt sind, ohne die Erfindung auf diese Ausführungsbeispiele zu beschränken. In den Zeichnungen zeigt:
- Fig. 1: eine schematische perspektivische Vorderansicht eines erfindungsgemäßen Gerätewagens;
- Fig. 2: eine schematische Darstellung einer ersten Ausführungsform der Grundplatte eines Gerätewagens gemäß Fig. 1;
- Fig. 3: eine vergrößerte Ansicht des Details III gemäß Fig.2;
- Fig. 4: eine Darstellung gemäß Fig. 2, jedoch eine zweite Ausführungsform darstellend und
- Fig. 5: eine vergrößerte Detailansicht eines Tragarms.

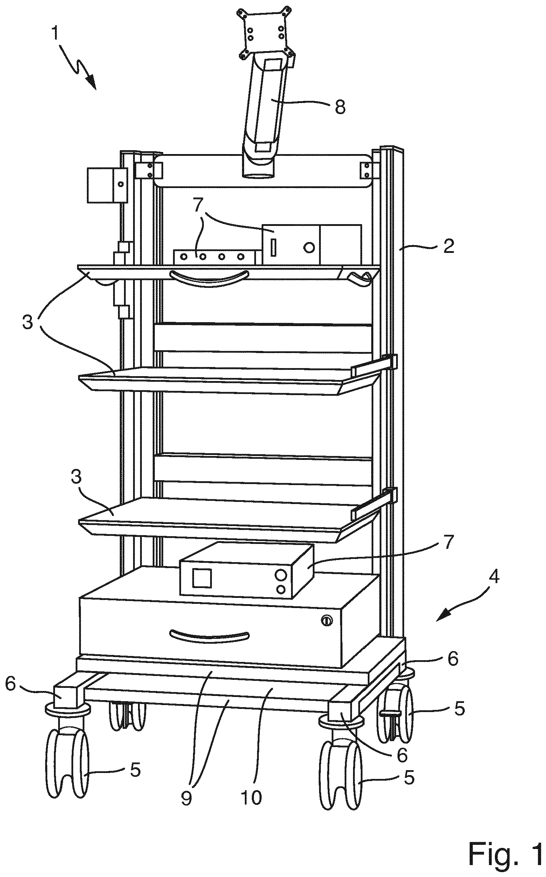

Abbildung Fig. 1 zeigt eine perspektivisch dargestellte Vorderansicht eines Gerätewagens 1, der im Wesentlichen aus einem Traggestell 2 mit parallel zueinander und übereinander am Traggestell 2 angeordneten Ablagebereichen 3 sowie einer unteren Grundplatte 4 besteht, wobei an der Grundplatte 4 mit Rollenfüßen 5 versehene Tragarme 6 gelagert sind.

Die Ablagebereiche 3 dienen zur Aufnahme verschiedenster Gerätschaften 7, wie beispielsweise Instrumenten, Infusionspumpen und dergleichen. Am oberen Ende des Traggestells 2 ist ein verschwenkbarer Haltearm 8 angeordnet, der zur Aufnahme eines Monitors dient, über den beispielsweise bei der endoskopischen Chirurgie der Operateur die Operation überwachen und verfolgen kann.

Da der Gerätewagen 1 mittels der Rollenfüße 5 für einen mobilen Einsatz verfahrbar ausgebildet ist, muss der Gerätwagen 1 ein hohes Maß an Standsicherheit und Kippsicherheit aufweisen.

Die Standsicherheit und Kippsicherheit des Gerätewagens 1 kann bei den dargestellten Ausführungsbeispielen durch eine Vergrößerung der Standfläche des Gerätewagens 1 erzielt werden, wozu mindestens ein mit einem Rollenfuß 5 bestückter Tragarm 6 in der horizontalen Ebene der Grundplatte 4 ausziehbar und verlagerbar an der Grundplatte 4 festlegbar ist.

Bei den in den Abbildungen Fig. 1, 2 und 4 dargestellten Ausführungsformen sind alle Tragarme 6 unabhängig voneinander individuell ausziehbar und verlagerbar an der Grundplatte 4 festlegbar.

Die Form der Grundplatte 4 sowie die Anzahl der mit den Rollenfüßen 5 versehenen Tragarme 6 können von Ausführungsform zu Ausführungsform variieren. Endscheidend für die Verbesserung der Standsicherheit und Kippsicherheit ist die Möglichkeit, durch das Herausziehen und Verlagern der Position der Tragarme 6 und somit auch der Rollenfüße 5 in der horizontalen Ebene der Grundplatte 4 die Standfläche des Gerätewagens 1 zu vergrößern oder anzupassen.

Durch das gezielte Verstellen jedes einzelnen mit einem Rollenfuß 5 versehenen Tragarms 6 kann ganz gezielt einer möglichen Verlagerung des Schwerpunktes des Gerätewagens 1, beispielsweise durch das Verschwenken des mit einem Monitor bestückten Haltearms 8 am oberen Ende des Traggestells 2, entgegengewirkt werden.

Die individuelle Einstellbarkeit eines jeden Tragarms 6 gewährleistet auch, dass beispielsweise auch bezogen auf die beengten Platzverhältnisse in einem Operationssaal ein Höchstmaß an Standfestigkeit und Kippsicherheit gewährleistet werden kann.

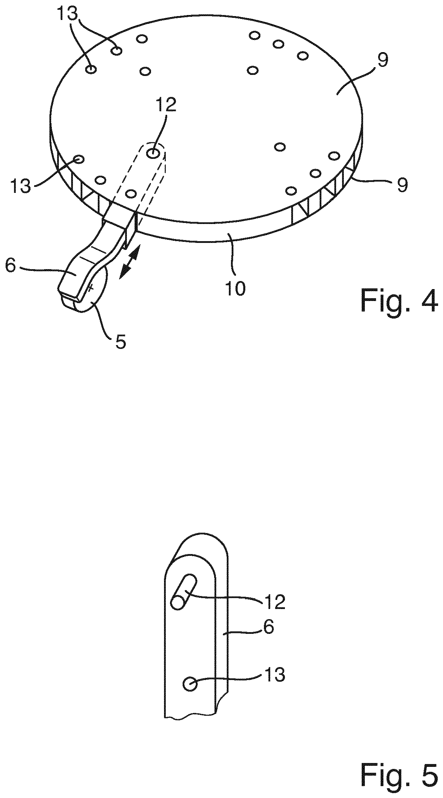

Bei den dargestellten Ausführungsbeispielen besteht die Grundplatte 4 jeweils aus zwei parallel und mit Abstand zueinander übereinander angeordneten Platten 9, wobei zwischen den Platten 9 ein Zwischenraum 10 ausgebildet ist, der beispielsweise zur Lagerung der Tragarme 6 dient. Beim in Fig. 4 dargestellten Ausführungsbeispiel entspricht der Abstand der beiden Platten 9 im Wesentlichen der Dicke eines Tragarms 6. Zur verbesserten Sicherung des Tragarms 6 zwischen den Platten 9 ist dieser am Rand der Grundplatte 4 in einer ihn umgebenden Führung angeordnet.

Um die Kippsicherheit eines Gerätewagens 1 zu erhöhen, ist es allgemein bekannt, den Schwerpunkt des Gerätewagens 1 möglichst tief anzuordnen.

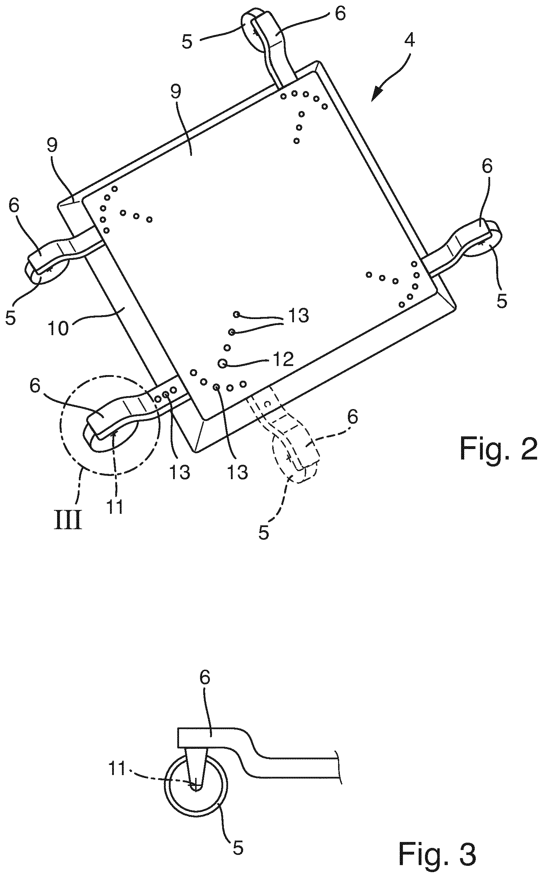

Bei den dargestellten Ausführungsformen eines Gerätewagens 1 wird dies, wie insbesondere aus Fig. 3 ersichtlich, unter anderem dadurch erzielt, dass die Rollenfüße 5 an den von der Grundplatte 4 entfernten freien vorderen Enden der Tragarme 6 angeordnet sind und dass die Tragarme 6 ausgehend von der Lagerstelle der Rollenfüße 5 in Richtung auf die Grundplatte 4 zu stufenförmig nach unten abgewinkelt ausgebildet sind, so dass die Tragarme 6 in etwa auf Höhe der horizontalen Drehachse 11 der Rollenfüße 5 an der Grundplatte 4 gelagert sind.

Weiterhin kann der Schwerpunkt des Gerätewagens 1 dadurch weiter nach unten verlagert werden, dass der Zwischenraum 10 zwischen den beiden Platten 9 der Grundplatte 4 als zusätzlicher Aufnahmeraum für Gerätschaften, insbesondere für die relativ schweren Transformatoren der aus Sicherheitsgründen mit Nieder- bzw. Kleinspannung betriebenen Geräte, nutzbar ist.

Das Ausziehen und Verlagern der Tragarme 6 in der horizontalen Ebene der Grundplatte 4 ist beispielhaft den Abbildungen Fig. 2 und 4 zu entnehmen.

Das Festlegen des mindestens einen der Tragarme 6 an der Grundplatte 4 in seiner jeweiligen Position erfolgt über Bolzen 12, die in korrespondierende Bohrungen 13 in der Grundplatte 4 und den Tragarmen 6 einsetzbar sind. Alternativ zur Ausgestaltung als Bohrung 13 ist es auch möglich, die Aufnahme für die Bolzen 12 an den Tragarmen 6 als Langlöcher auszubilden.

Alternativ zur Verwendung von Bolzen 12 zum Fixieren der Tragarme 6 in ihrer jeweiligen Lage an der Grundplatte 4 ist es selbstverständlich auch möglich, die Tragarme über Schraubverbindungen an der Grundplatte 4 festzulegen. Hierfür können die Bohrungen 13 beispielsweise ein Innengewinde und die Bolzen 12 ein passendes Außengewinde zur Befestigung der Bolzen 12 in den Bohrungen 13 aufweisen.

In Fig. 2 ist an einer Ecke der Grundplatte 4 dargestellt, zwischen welchen Positionen ein Tragarm 6 bei dieser Ausführungsform der Grundplatte 4 verstellbar ist, nämlich zwischen einer weit ausgezogenen und ganz nach links verlagerten Position (durchgezogene Linie) und der eingeschobenen und ganz nach rechts verlagerten Position (gestrichelte Linie).

Alternativ zum Verlängern eines Tragarms 6 durch Herausziehen aus der Grundplatte 4 und Fixieren mit einem Bolzen 12 ist es auch möglich, die Tragarme 6 teleskopierbar, also ineinanderschiebbar und auseinanderziehbar, oder über eine Gewindestrecke hereinschraubbar und herausschraubbar auszugestalten.

Bei der in Fig. 4 dargestellten Ausführungsform sind die Tragarme 6 als um einen am grundplattenseitigen freien Ende der Tragarme 6 festlegbaren Bolzen 12 verschwenkbar an der Grundplatte 4 gelagert. Im Falle der dargestellten kreisförmigen Grundplatte 4 bleibt die radiale Länge der Tragarme 6 beim Verschwenken um den Bolzen 12 stets gleich. Das radiale Verlängern der Tragarme 6 kann über eine teleskopierbare oder schraubbare Ausgestaltung erfolgen.

Die Abbildung Fig. 5 zeigt ausschnittweise einen Tragarm 6, wie er bei der Ausgestaltung gemäß Fig. 4 zum Einsatz kommen kann. In diesem Fall ist der Bolzen 12 fest am an der Grundplatte 4 festlegbaren freien Ende des Tragarms 6 angeordnet und wird in die entsprechende Bohrung 13 in der Grundplatte 4 so eingesetzt, dass der Tragarm 6 um diesen Bolzen 12 verschwenkbar ist. Die Bohrung 13 im Tragarm 6 dient beim Fixieren des Tragarms 6 in der jeweiligen verschwenkten Position relativ zur Grundplatte 4 zur Aufnahme eines in eine Bohrung der Grundplatte 4 eingesetzten Bolzens 12.

Der wie voranstehend beschrieben ausgebildete Gerätewagen 1 zeichnet sich dadurch aus, dass die mit den Rollenfüßen 5 ausgestatteten Tragarme 6 nicht nur in der horizontalen Ebene der Grundplatte 4 auszuziehbar sind, sondern auch in der horizontalen Ebene der Grundplatte 4 verlagert werden können, um so die Möglichkeit zu schaffen, die Standfläche des Gerätewagens 1 gezielt so zu vergrößern, dass die Vergrößerung der Standfläche genau dort vorgenommen werden kann, wo, beispielsweise durch Ausschwenken eines Haltearms 8, der Schwerpunkt des Gerätewagens 1 ungünstig verlagert wurde.

### Bezugszeichenliste

- 1: Gerätewagen
- 2: Traggestell
- 3: Ablagebereich
- 4: Grundplatte
- 5: Rollenfuß
- 6: Tragarm
- 7: Gerätschaft
- 8: Haltearm
- 9: Platte
- 10: Zwischenraum
- 11: Drehachse
- 12: Bolzen
- 13: Bohrung

## Patentansprüche

1. Gerätewagen mit einem Traggestell (2), das mindestens einen Ablagebereich (3) zur Aufnahme von Gerätschaften (7) sowie eine Grundplatte (4) aufweist, wobei an der Grundplatte (4) mit Rollenfüßen (5) versehene Tragarme (6) gelagert sind, wobei mindestens ein Tragarm (6) in der horizontalen Ebene der Grundplatte (4) ausziehbar und verlagerbar an der Grundplatte (4) festlegbar ist, und die Grundplatte (4) aus zwei voneinander beabstandeten parallel zueinander angeordneten Platten (9) besteht und der Zwischenraum (10) zwischen den beiden Platten (9) der Grundplatte (4) als zusätzlicher Aufnahmeraum für Gerätschaften, nutzbar ist **dadurch gekennzeichnet, dass** die Rollenfüße (5) an den von der Grundplatte (4) entfernten freien vorderen Enden der Tragarme (6) angeordnet sind und, dass die Tragarme (6) ausgehend von der Lagerstelle der Rollenfüße (5) in Richtung auf die Grundplatte (4) zu stufenförmig nach unten abgewinkelt ausgebildet sind.

2. Gerätewagen nach Anspruch 1, **dadurch gekennzeichnet, dass** alle Tragarme (6) in der horizontalen Ebene der Grundplatte (4) ausziehbar und verlagerbar an der Grundplatte (4) festlegbar sind.

3. Gerätewagen nach Anspruch 1 oder 2, **dadurch gekennzeichnet, dass** die Tragarme (6) unabhängig voneinander und individuell ausziehbar und verlagerbar sind.

4. Gerätewagen nach einem der Ansprüche 1 bis 3, **dadurch gekennzeichnet, dass** der mindestens eine Tragarm (6) stufenlos ausziehbar und verlagerbar an der Grundplatte (4) festlegbar ist.

5. Gerätewagen nach einem der Ansprüche 1 bis 3, **dadurch gekennzeichnet, dass** der mindestens eine Tragarm (6) in vorgegebenen Rastschritten ausziehbar und verlagerbar an der Grundplatte (4) festlegbar ist.

6. Gerätewagen nach einem der Ansprüche 1 bis 4, **dadurch gekennzeichnet, dass** am grundplattenseitigen freien Ende des mindestens einen Tragarms (6) ein Bolzen (12) so festlegbar ist, dass der mindestens eine Tragarm (6) um den Bolzen (12) verschwenkbar an der Grundplatte (4) gelagert ist.

7. Gerätewagen nach einem der Ansprüche 1 bis 6, **dadurch gekennzeichnet, dass** das Festlegen des mindestens einen Tragarms (6) an der Grundplatte (4) in seiner jeweiligen Position über Bolzen (12) erfolgt, die in korrespondierende Bohrungen (13) in der Grundplatte (4) und des Tragarms (6) einsetzbar sind.

8. Gerätewagen nach Anspruch 7 , **dadurch gekennzeichnet, dass** die Tragarme (6) zwischen den beiden Platten (9) der Grundplatte (4) gelagert sind.

9. Gerätewagen nach Anspruch 1, **dadurch gekennzeichnet, dass** die Tragarme (6) in etwa auf Höhe der horizontalen Drehachse (11) der Rollenfüße (5) an der Grundplatte (4) gelagert sind.

## Claims

1. Equipment cart having a supporting framework (2), which has at least one shelf region (3) for receiving items of equipment (7) and also has a base plate (4), wherein carrying arms (6) provided with castors (5) are mounted on the base plate (4), wherein at least one carrying arm (6) is secured on the base plate (4) so as to be extended and displaced in the horizontal plane of the base plate (4), and the base plate (4) comprises two spaced-apart plates (9) arranged parallel to one another, and the interspace (10) between the two plates (9) of the base plate (4) can be used as additional space for accommodating items of equipment, **characterized in that** the castors (5) are arranged at the free front ends of the carrying arms (6), said ends being remote from the base plate (4), and **in that**, starting from the bearing location of the castors (5), the carrying arms (6) are angled downwards in a step-like manner in the direction of the base plate (4).

2. Equipment cart according to Claim 1, **characterized in that** all the carrying arms (6) can be secured on the base plate (4) so as to be extended and displaced in the horizontal plane of the base plate (4).

3. Equipment cart according to Claim 1 or 2, **characterized in that** the carrying arms (6) are extended and displaced independently of one another and individually.

4. Equipment cart according to one of Claims 1 to 3, **characterized in that** the at least one carrying arm (6) can be secured on the base plate (4) so as to be extended and displaced in a stepless manner.

5. Equipment cart according to one of Claims 1 to 3, **characterized in that** the at least one carrying arm (6) ist secured on the base plate (4) so as to be extended and displaced in predetermined latching steps.

6. Equipment cart according to one of Claims 1 to 4, **characterized in that** a bolt (12) can be secured at that free end of the at least one carrying arm (6) which is directed towards the base plate, such that the at least one carrying arm (6) is mounted on the base plate (4) for pivoting action about the bolt (12).

7. Equipment cart according to one of Claims 1 to 6, **characterized in that** the at least one carrying arm (6) is secured in its respective position on the base plate (4) via bolts (12) which can be inserted into corresponding bores (13) in the base plate (4) and the carrying arm (6).

8. Equipment cart according to Claim 7, **characterized in that** the carrying arms (6) are mounted between the two plates (9) of the base plate (4).

9. Equipment cart according to Claim 1, **characterized in that** the carrying arms (6) are mounted on the base plate (4) approximately level of the horizontal axis of rotation (11) of the castors (5) .

## Revendications

1. Servante d'outillage comprenant un bâti porteur (2), qui présente au moins une région de rangement (3) pour recevoir des tiges d'appareil (7) ainsi qu'une plaque de base (4), des bras de support (6) pourvus de pieds à roulettes (5) étant supportés sur la plaque de base (4), au moins un bras de support (6) pouvant être fixé sur la plaque de base (4) de manière déplaçable et de manière à pouvoir être sorti dans le plan horizontal de la plaque de base (4) et la plaque de base (4) se composant de deux plaques (9) espacées l'une de l'autre et disposées parallèlement l'une à l'autre et l'espace intermédiaire (10) entre les deux plaques (9) de la plaque de base (4) pouvant être utilisé en tant qu'espace de réception supplémentaire pour des tiges d'appareil, **caractérisée en ce que** les pieds à roulettes (5) sont disposés au niveau des extrémités avant libres des bras de support (6) éloignées de la plaque de base (4), et **en ce que** les bras de support (6), partant du point de support des pieds à roulettes (5), sont réalisés de manière coudée vers le bas sous forme étagée dans la direction de la plaque de base (4).

2. Servante d'outillage selon la revendication 1, **caractérisée en ce que** tous les bras de support (6) peuvent être fixés sur la plaque de base (4) de manière déplaçable et de manière à pouvoir être sortis dans le plan horizontal de la plaque de base (4).

3. Servante d'outillage selon la revendication 1 ou 2, **caractérisée en ce que** les bras de support (6) peuvent être sortis et déplacés indépendamment les uns des autres et individuellement.

4. Servante d'outillage selon l'une quelconque des revendications 1 à 3, **caractérisée en ce que** l'au moins un bras de support (6) peut être fixé de manière à pouvoir être sorti et déplacé de manière continue sur la plaque de base (4).

5. Servante d'outillage selon l'une quelconque des revendications 1 à 3, **caractérisée en ce que** l'au moins un bras de support (6) peut être fixé sur la plaque de base (4) de manière déplaçable et de manière à pouvoir être sorti par incréments prédéfinis.

6. Servante d'outillage selon l'une quelconque des revendications 1 à 4, **caractérisée en ce qu'**à l'extrémité libre du côté de la plaque de base de l'au moins un bras de support (6) peut être fixé un boulon (12) de telle sorte que l'au moins un bras de support (6) soit supporté sur la plaque de base (4) de manière à pouvoir pivoter autour du boulon (12).

7. Servante d'outillage selon l'une quelconque des revendications 1 à 6, **caractérisée en ce que** la fixation de l'au moins un bras de support (6) sur la plaque de base (4) dans sa position respective s'effectue par le biais de boulons (12) qui peuvent être insérés dans des alésages correspondants (13) dans la plaque de base (4) et dans le bras de support (6).

8. Servante d'outillage selon la revendication 7, **caractérisée en ce que** les bras de support (6) sont supportés entre les deux plaques (9) de la plaque de base (4).

9. Servante d'outillage selon la revendication 1, **caractérisée en ce que** les bras de support (6) sont supportés approximativement à la hauteur de l'axe de rotation horizontal (11) des pieds à roulettes (5) sur la plaque de base (4).
